# EUROPÄISCHE PATENTSCHRIFT

(11) **EP 4 079 449 B1**
(45) Veröffentlichungstag und Bekanntmachung des Hinweises auf die Patenterteilung: **12.08.2026**
(21) Anmeldenummer: 22177170.2
(22) Anmeldetag: 19.12.2019
(51) Int. Cl.: B23Q 17/00, B23Q 17/22, B23Q 17/24

(54) **SPANNVORRICHTUNG**
CLAMPING DEVICE
DISPOSITIF DE SERRAGE

(30) Priorität: 21.12.2018 DE 102018222860
(43) Veröffentlichungstag der Anmeldung: 26.10.2022
(62) Dokumentnummer(n) der früheren Anmeldung(en) nach Art. 76 EPÜ: 19218036.2 / 3 670 073
(73) Patentinhaber: Felder KG, 6060 Hall (AT)
(72) Erfinder: FELDER, Johann, 6060 Hall in Tirol (AT)
(74) Vertreter: Torggler & Hofmann Patentanwälte - Innsbruck

(56) Entgegenhaltungen:
- EP-A1- 2 845 702
- EP-A1- 3 219 426
- DE-B3- 102010 030 417
- DE-U1- 20 308 354

## Beschreibung

Die vorliegende Erfindung betrifft eine Spannvorrichtung zum Festspannen eines zu bearbeitenden, insbesondere plattenförmigen, Werkstücks, mit einem Maschinenrahmen, wenigstens einem, relativ zum Maschinenrahmen bewegbaren und mit dem Maschinenrahmen verbindbaren Spannmittel, und wenigstens einer Positioniervorrichtung zum Positionieren des wenigstens einen Spannmittels relativ zum Maschinenrahmen, wobei die Positioniervorrichtung eine Vielzahl von einzeln aktivierbaren Leuchtdioden aufweist, wobei durch zumindest eine aktivierte Leuchtdiode zumindest ein Soll- oder Istparameter für das wenigstens eine Spannmittel anzeigbar ist. Zudem betrifft die Erfindung eine Bearbeitungsmaschine für die Holzbearbeitung, insbesondere eine CNC-Bearbeitungsmaschine, mit einer Bearbeitungsvorrichtung zum Bearbeiten eines, insbesondere plattenförmigen, Werkstücks und einer solchen Spannvorrichtung.

Bei der Bearbeitung von Werkstücken, meist plattenförmigen Werkstücken aus Holz oder holzbasierten Materialien, kommen seit vielen Jahren Spannvorrichtungen zum Einsatz, mit denen das Werkstück möglichst exakt und sicher relativ zum Maschinengehäuse positioniert wird. Um die Spannmittel am Maschinengehäuse entsprechend genau zu positionieren, kommen Positioniervorrichtungen zum Einsatz, die vor allem die manuelle Positionierung der einzelnen Spannmittel erleichtern.

Beispielsweise ist aus der DE 94 03 212 U1 eine Werkstückauflage mit von Hand positionierbaren Saugspannern bekannt, wobei an Schienen je ein Leuchtband angeordnet ist, an denen die einzurichtende Position der darauf anzuordnenden Saugspanner optisch anzeigbar ist. Die Leuchtbänder bestehen jeweils aus einer Reihe von punktförmigen Lichtquellen, insbesondere Leuchtdioden. Eine unterschiedliche Leuchtintensität kann zur Signalisierung der Lage dienen.

Die DE 203 08 354 U1 zeigt eine Rüsthilfe an einem Konsolentisch eines CNC-Bearbeitungszentrums, wobei eine Justieranzeigevorrichtung aus einem Leuchtband aus hintereinander angeordneten Leuchtdioden besteht. Durch einen einzelnen Leuchtpunkt oder durch eine Hell/Dunkel-Grenze zwischen aktivierten und nicht aktivierten Leuchtpunkten kann eine entlang der Justieranzeigevorrichtung anzufahrende Position angezeigt werden. Die Saugspanner werden von Hand in Längsrichtung des Aufspannbalkens verschoben.

Die DE 10 2010 030 417 B3 zeigt eine Anzeigeeinrichtung zum Anzeigen von Rüstpositionen von Werkstückauflageelementen an einer Tragstruktur einer Werkstückauflage einer maschinellen Anlage zum Bearbeiten von Werkstücken. Mittels der Anzeigemuster können zusätzlich zu den Rüstpositionen auch weitere Informationen bzw. Anweisungen an den Monteur übergeben werden. Beispielsweise können die LED-Leuchten mit unterschiedlichen Farben aufleuchten. Jeder Farbe ist z. B. eine bestimmte Bauform, Bauhöhe oder Ähnliches eines Werkstückauflageelementes zugeordnet, sodass der Monteur anhand der Farbe der LED-Leuchten auch auf die Art des zu montierenden Werkstückauflageelementes rückschließen kann. Diese gattungsfremde Schrift zeigt aber ein aufwändiges Rüstsystem, da das Anzeigeelement nacheinander händisch in verschiedene, definierte Anzeigepositionen relativ zu der Tragstruktur angeordnet werden muss. Das heißt, bis sich alle Werkstückauflageelemente an ihrer jeweils richtigen Position befinden, muss das Anzeigeelement mehrmals zwischen den Kennungen (a bis k) bewegt werden. Es kann also nicht auf einem Blick überprüft werden, ob sich alle Werkstückauflageelemente tatsächlich in der richtigen Position befinden, sondern nur für jene Reihe (a bis k), wo sich gerade das Anzeigeelement befindet. Die DE 10 2010 030 417 B3 zeigt also nur ein einziges, umständlich zu bewegendes Anzeigeelement und davon separate Werkstückauflageelemente.

Die EP 2 992 993 A1 zeigt eine Vorrichtung und ein Verfahren zur Positionierung eines Spannelements. Die Soll-Position des Spannelements erfolgt über eine Anzeige mit einem Lichtsignal. Dieses Lichtsignal kann sowohl zur Anzeige der Position als auch zur Anzeige der zu positionierenden Spannelementgröße verwendet werden. Die Anzeige der Soll-Position erfolgt zusätzlich, indem ein Teil der Lichtsignale periodisch aufleuchtet.

Eine weitere Vorrichtung, bei welcher Spannelemente positioniert werden, ist bereits aus der Schrift EP 2 845 702 A1 bekannt, wobei einem Bediener zugängliche und nicht zugängliche Bereiche an der Maschine mittels Licht visualisiert werden.

Die Aufgabe der vorliegenden Erfindung besteht darin, eine zum Stand der Technik alternative oder verbesserte Spannvorrichtung zu schaffen. Insbesondere soll die Positionierung vereinfacht werden. Die Handhabung soll vor allem intuitiver erfolgen können.

Dies wird durch eine Spannvorrichtung mit den Merkmalen von Anspruch 1 gelöst. Demnach ist erfindungsgemäß vorgesehen, dass die Vielzahl von Leuchtdioden derart ausgebildet ist, Licht wenigstens zweier unterschiedlicher Wellenlängen im sichtbaren Wellenlängenbereich zu emittieren. Das heißt, mit der Vielzahl von Leuchtdioden kann Licht in zumindest zwei, vorzugsweise in beliebig vielen, unterschiedlichen Farben emittiert werden. Mit diesen unterschiedlichen Farben kann eine zusätzliche Information beim und für das Positionieren der Spannmittel angegeben werden. Anders ausgedrückt kann mit den wenigstens zwei unterschiedlichen Wellenlängen ein bestimmter Soll- oder Istparameter angezeigt und veranschaulicht werden.

Es ist vorgesehen, dass Spannelemente ein Identifikationsmittel zur Signalisierung eines Spannmitteltyps der Spannelemente umfassen, wobei eine Farbe des Identifikationsmittels mit einer emittierten Farbe der Vielzahl von Leuchtdioden übereinstimmt, welche den Spannmitteltyp als einen Soll- oder Istparameter des zumindest einen Soll- oder Istparameters darstellt, und/oder in einer zweiten Richtung relativ zu Konsolen bewegbar und an den Konsolen festlegbar sind, wobei Licht der Vielzahl von Leuchtdioden in die erste Richtung emittierbar ist.

Gemäß einem bevorzugten Ausführungsbeispiel ist vorgesehen, dass der zumindest eine Soll- oder Istparameter eine Sollposition des wenigstens einen Spannmittels und/oder eine Sollgröße des wenigstens einen Spannmittels und/oder eine Sollausrichtung des wenigstens einen Spannmittels und/oder einen Spannstatus des wenigstens einen Spannmittels und/oder einen Spannmitteltyp und/oder einen Maschinenstatus repräsentiert. Im Speziellen bilden die Sollposition, die Sollgröße, die Sollausrichtung und der Spannmitteltyp einen Sollparameter. Der Spannstatus und der Maschinenstatus bilden jeweils einen Istparameter.

Der Sollparameter Spannmitteltyp gibt an, welcher Typ von Spannmittel verwendet werden soll. Grundsätzlich werden die Spannmittel (im Speziellen die Spannelemente) in Saugspanner und in Rahmenspanner (oder Klemmspanner) unterteilt. Mit den Saugspannern werden die Werkstücke angesaugt und dadurch fixiert. Mit den Rahmenspannern erfolgt ein horizontales oder vertikales Klemmen der Werkstücke. Zu jeden dieser Saugspanner und Rahmenspanner gibt es jeweils wieder Untergruppen, wobei sich diese jeweils in der Form und in der Größe (z. B. Sollgröße der Auflagefläche) unterscheiden. Meist werden in etwa fünf bis fünfzehn verschiedene Spannmitteltypen verwendet. Jedem Spannmitteltyp wird eine eigene, unterscheidbare Farbe zugeordnet. Die Zuordnung kann bereits durch den Hersteller der Spannvorrichtung erfolgen oder kann durch einen Benutzer der Spannvorrichtung individuell festgelegt und eingestellt werden.

Der Sollparameter Sollausrichtung gibt an, in welcher Richtung die Auflagefläche des Spannmittels ausgerichtet sein soll. Das heißt, wenn die Auflagefläche länglich ausgebildet ist, so gibt die Sollausrichtung an, ob die Auflagefläche parallel zur Maschinenlängsachse oder rechtwinkelig zur Maschinenlängsachse ausgerichtet sein soll.

Der Soll- oder Istparameter Spannstatus gibt an, ob das Spannmittel beispielsweise offen, geklemmt oder angesaugt vorliegt. Es stellt also einen Istparameter dar. Hier können, wenn notwendig, auch entsprechende Sensoren vorhanden sein. Im Speziellen kann der Spannstatus drei verschiedene Werte einnehmen. Ein erster Wert des Spannstatus kann der Wert "Spannmittel nicht positioniert" sein. Dieser wird zum Beispiel durch die Farbe Rot repräsentiert. Das heißt, an einer bestimmten Stelle der Spannvorrichtung fehlt noch ein Spannmittel. Ein zweiter Wert des Spannstatus kann der Wert "Spannmittel fixiert" sein. Dies wird zum Beispiel durch die Farbe Gelb repräsentiert. Das heißt, das Spannmittel ist an der bestimmten Stelle positioniert und fixiert. Ein dritter Wert des Spannstatus kann der Wert "Werkstück geklemmt" sein. Dies wird zum Beispiel durch die Farbe Grün repräsentiert. Das heißt, das Spannmittel ist am Maschinengehäuse, beispielsweise durch Saugen oder Klemmen, fixiert und das Werkstück ist fest angesaugt (im Falle eines Vakuumsaugers bzw. Saugspanners) oder geklemmt (im Falle eines Rahmenspanners). Somit wird für einen Benutzer durch dieses Ampelschema sofort ersichtlich, ob an einer bestimmten Stelle ein Spannmittel überhaupt fehlt, ob es nur positioniert und fixiert ist und ob das Werkstück bereits festgeklemmt ist.

Der Istparameter Maschinenstatus gibt an, ob die gesamte Bearbeitungsmaschine (oder zumindest ein Teilbereich der Bearbeitungsmaschine, z. B. ein bestimmtes Feld der Spannvorrichtung) bereit für eine Bearbeitung ist. Dieser Maschinenstatus kann zwei Werte einnehmen, nämlich zum einen "Maschine blockiert" oder "Feld blockiert" zum anderen "Maschine bereit" oder "Feld bereit". Der erste Wert kann zum Beispiel durch Blinken oder durch eine Farbe (z. B. Rot) signalisiert werden, der zweite Wert kann durch ein durchgehendes Leuchten oder durch eine Farbe (z. B. Grün) signalisiert werden. Das heißt, erst wenn alle Spannmittel an der vorgesehenen Position fixiert sind, wird der Maschinenstatus der gesamten Bearbeitungsmaschine oder zumindest eines bestimmten Feldes der Spannvorrichtung auf "bereit" geschaltet. Dies signalisiert dem Benutzer, dass er in der Maschinensteuerung vom Spannmodus (kann auch Rüstmodus genannt werden) in den Bearbeitungsmodus schalten kann. Dieses Umschalten kann gegebenenfalls auch automatisch erfolgen. Der Maschinenstatus kann z. B. auch eine Störung, eine programmierte Pause oder einen notwendigen Benutzereingriff (z. B. das Herausnehmen eines abgeschnittenen Teil) durch entsprechende verschiedene Farben anzeigen bzw. repräsentieren. Dies kann auch (nur) im jeweiligen Arbeitsfeld angezeigt bzw. signalisiert werden.

Bevorzugt ist vorgesehen, dass nur einer dieser Soll- oder Istparameter durch (unterschiedliche) Farbwiedergabe angezeigt wird. Es kann also vorgesehen sein, dass die Sollposition durch die Ansteuerung und das Aufleuchten einer Leuchtdiode (oder mehrerer Leuchtdioden) an einer bestimmten Stelle angezeigt wird, unabhängig davon, in welcher Farbe die Leuchtdiode leuchtet. Wenn diese Leuchtdiode zusätzlich (oder eine benachbarte Leuchtdiode) in einer bestimmten Farbe leuchtet, zeigt das den Spannmitteltyp (z. B. die Sollgröße des Spannmittels) an. Ein Blinken der Leuchtdiode kann die Sollausrichtung oder den Spannstatus anzeigen. Das heißt, in diesem Fall dient die Farbe nur der Information über den Spannmitteltyp. Natürlich kann aber auch jeder andere Soll- oder Istparameter mittels der Farbgebung angezeigt werden. Bevorzugt ist vorgesehen, dass jeder dieser Soll- oder Istparameter durch ein eigenständiges und unterscheidbares Signal angezeigt wird (z. B. durch Blinken, durch die Farbe, durch die Position, akustisch, magnetisch, usw.).

Sichtbares Licht liegt in einem Wellenlängenbereich zwischen 380 und 780 nm (Nanometer). Um eine mit dem Auge sichtbare und ausreichende Unterscheidung von Licht wenigstens zweier unterschiedlicher Wellenlängen zu ermöglichen, ist bevorzugt vorgesehen, dass sich die Wellenlängen um wenigstens 10 nm, vorzugsweise um wenigstens 20 nm, besonders bevorzugt um wenigstens 30 nm, voneinander unterscheiden. Das heißt, eine Leuchtdiode der Vielzahl von Leuchtdioden kann beispielsweise Licht in einem Bereich um etwa 620 nm emittieren (orange Farbe), während zumindest eine andere Leuchtdiode Licht mit einer Wellenlänge von etwa 530 nm emittiert (grüne Farbe). Der Abstand sollte so groß gewählt werden, dass mit dem menschlichen Auge eindeutig eine Unterscheidung möglich ist.

Es sei auch angeführt, dass die von einer bestimmten Leuchtdiode (zu einem bestimmten Zeitpunkt) emittierte Wellenlänge nicht konstant und nicht eindeutig sein muss. So kann die von einer bestimmten Leuchtdiode emittierte Wellenlänge in einem etwa 1 bis 10 nm breiten Bereich liegen bzw. in diesem schwanken.

Bezüglich der Bauweise der Spannvorrichtung ist vorgesehen, dass die Spannmittel mehrere Spannelemente, vorzugsweise Vakuum-Spannsauger, umfassen. Bevorzugt sind zwischen drei und zwanzig Spannelemente vorgesehen.

Es kann vorgesehen sein, dass die Spannelemente direkt am Maschinengehäuse anbringbar sind. Es ist allerdings vorgesehen, dass die Spannelemente indirekt über Konsolen am Maschinengehäuse angebracht werden. Solche Konsolen sind bevorzugt als im Querschnitt profilförmige, längliche Träger ausgebildet. Die Konsolen sind entlang der der Maschinenlängsachse (entspricht der ersten Richtung) am Maschinenrahmen bewegbar. Meist umfassen Spannvorrichtungen zwei bis zehn, vorzugsweise parallel zueinander angeordnete, Konsolen.

Es ist vorgesehen, dass die Spannmittel mehrere Konsolen umfassen, welche in einer ersten Richtung relativ zum Maschinenrahmen bewegbar und am Maschinenrahmen festlegbar sind. Das heißt, auch die Konsolen bilden Spannmittel. Es ist also vorgesehen, dass sowohl die Spannelemente als auch die Konsolen Spannmittel bilden. Das bedeutet, dass die Spannelemente und die Konsolen jeweils (oder auch nur eine der beiden Komponenten) mittels der Positioniervorrichtung positioniert werden können.

Es ist vorgesehen, dass die Vielzahl von einzeln aktivierbaren Leuchtdioden der Positioniervorrichtung an dem wenigstens einen Spannmittel und/oder am Maschinenrahmen angeordnet ist. Bevorzugt ist vorgesehen, dass die Vielzahl von einzeln aktivierbaren Leuchtdioden der Positioniervorrichtung am Spannmittel in Form der Konsole angeordnet ist. Bevorzugt ist an jeder Konsole jeweils eine Vielzahl von einzeln aktivierbaren Leuchtdioden der Positioniervorrichtung angeordnet. Dagegen ist am Spannmittel in Form der Spannelemente keine Vielzahl von einzeln aktivierbaren Leuchtdioden angeordnet. Alternativ - bevorzugt zusätzlich - kann vorgesehen sein, dass eine Vielzahl von einzeln aktivierbaren Leuchtdioden (konkret ein LED-Streifen) am Maschinenrahmen angeordnet ist. Über diese Leuchtdioden können die einzelnen Konsolen richtig am Maschinenrahmen platziert werden.

Besonders bevorzugt ist vorgesehen, dass die Spannelemente in einer zweiten Richtung relativ zu den Konsolen bewegbar und an den Konsolen festlegbar sind. Bevorzugt sind die Spannelemente entlang der Konsole (also rechtwinkelig zur Maschinenlängsachse) bewegbar.

Die Vielzahl von Leuchtdioden kann an sich beliebig angeordnet sein, solange die Leuchtdioden für einen Benutzer gut ersichtlich angeordnet sind. Bevorzugt ist vorgesehen, dass die Vielzahl von Leuchtdioden entlang einer geraden Linie angeordnet ist. Bevorzugt sind die Leuchtdioden entlang einer horizontalen geraden Linie angeordnet.

Weiters ist bevorzugt vorgesehen, dass die einzelnen Leuchtdioden der Vielzahl von Leuchtdioden in regelmäßigen Abständen zueinander angeordnet sind.

Gemäß einem bevorzugten Ausführungsbeispiel ist vorgesehen, dass die Vielzahl von Leuchtdioden in Form eines LED-Streifens ausgebildet ist. Wenn dieser LED-Streifen zur Positionierung der Spannelemente dient, kann der LED-Streifen (von oben) in das Profil einer Konsole eingelassen werden, um die Ablesbarkeit zu verbessern. Um den LED-Streifen vor Staub und Spänen zu schützen, sollte der LED-Streifen flächenbündig mit der Konsolenoberfläche abschließen. Dies kann beispielsweise durch einen transparenten Abdeckstreifen erzielt werden. Alternativ und bevorzugt ist vorgesehen, dass der LED-Streifen in eine transparente und elastische Umhüllung eingegossen ist. Vor allem für einen einfacheren Transport ist dieser LED-Streifen aufrollbar.

Besonders bevorzugt ist vorgesehen, dass an jeder Konsole ein LED-Streifen angeordnet ist, sodass über diesen LED-Streifen jeweils Soll- oder Istparameter für die an dieser Konsole angeordneten Spannelemente anzeigbar sind.

Zusätzlich (oder alternativ) kann vorgesehen sein, dass am Maschinengehäuse, vorzugsweise nur, ein LED-Streifen angeordnet ist, sodass über diesen LED-Streifen jeweils Soll- oder Istparameter für die am Maschinengehäuse angeordneten Konsolen anzeigbar sind.

Gemäß einer Variante der Ausbildung der Leuchtdioden ist vorgesehen, dass die Leuchtdioden - vorzugsweise jede der Leuchtdioden - der Vielzahl von einzeln aktivierbaren Leuchtdioden derart ausgebildet sind, jeweils Licht nur einer bestimmten Wellenlänge zu emittieren. Das heißt, die Leuchtdioden sind derart ausgebildet, dass sie jeweils in nur einer Farbe aufleuchtet, wobei verschiedene Leuchtdioden der Vielzahl von einzeln aktivierbaren Leuchtdioden in wenigstens zwei unterschiedlichen Farben aufleuchten. Diese verschiedenen Leuchtdioden sollten möglichst nahe beieinander angeordnet sein (Maximalabstand etwa 5 mm), um praktisch an jeder Stelle der Positioniervorrichtung eine entsprechende Anzeige eines Soll- oder Istparameters zu ermöglichen.

Für eine einfachere Herstellung ist gemäß einer anderen (bevorzugten) Variante der Ausbildung der Leuchtdioden vorgesehen, dass die Leuchtdioden - vorzugsweise jede der Leuchtdioden - der Vielzahl von einzeln aktivierbaren Leuchtdioden derart ausgebildet sind, Licht wenigstens zweier, vorzugsweise dreier, unterschiedlicher Wellenlängen zu emittieren. Das heißt, jede Leuchtdiode kann so angesteuert werden, dass sie - je nach Ansteuerung - in unterschiedlichen Farben aufleuchten kann.

Besonders bevorzugt ist hierzu vorgesehen, dass die Leuchtdioden - vorzugsweise jede der Leuchtdioden - der Vielzahl von einzeln aktivierbaren Leuchtdioden als RGB-Leuchtdioden (Rote, grüne, blaue Leuchtdioden) ausgebildet sind. Diese sogenannte RGB-LEDs sind abgeleitet von dem Begriff des RGB-Farbraumes. Derartige Leuchtdioden werden in einem LED-Gehäuse miteinander so kombiniert, dass sich ihr Licht gut mischt. Durch entsprechende Ansteuerung der einzelnen Leuchtdioden kann das emittierte Licht von außen als weiß oder in einer sonstigen gewünschten Farbe erscheinen. Zur besseren Lichtmischung können zusätzliche optische Komponenten wie ein Diffusor eingesetzt werden. Bei dieser Kombination von einzelnen Leuchtdioden in einem gemeinsamen LED-Gehäuse ist durch eine entsprechende Ansteuerung der einzelnen Leuchtdioden auch andersfarbiges Licht herstellbar. Auch fließende Farbübergänge sind möglich.

Bevorzugt ist vorgesehen, dass die Spannvorrichtung eine Steuer- oder Regeleinheit zum Steuern oder Regeln der Positioniervorrichtung aufweist. Insbesondere ist vorgesehen, dass mit dieser Steuer- oder Regeleinheit die einzeln aktivierbaren Leuchtdioden ansteuerbar sind. Das heißt, mit der Steuer- oder Regeleinheit kann jede Leuchtdiode einzeln angesteuert (und aktiviert) werden, sodass die jeweilige Leuchtdiode aufleuchtet oder nicht aufleuchtet.

Besonders bevorzugt ist vorgesehen, dass - vor allem wenn jede Leuchtdiode als RGB-Leuchtdiode ausgebildet ist - jede Leuchtdiode von der Steuer- oder Regeleinheit derart ansteuerbar ist, dass sie Licht in einer bestimmten, von der Steuer- oder Regeleinheit vorgegebenen Wellenlänge emittiert. Diese Ansteuerung kann basierend auf einem in der Steuer- oder Regeleinheit hinterlegten Ansteuerungsschema oder -programm erfolgen. Dieses Schema oder Programm kann in Abhängigkeit der Form eines auf der Spannvorrichtung festzuspannenden Werkstücks - vorzugsweise automatisch - erzeugt werden.

Bevorzugt ist vorgesehen, dass mit der Steuer- oder Regeleinheit zum Steuern oder Regeln der Positioniervorrichtung mehrere LED-Streifen gleichzeitig ansteuerbar sind.

Die Steuer- oder Regeleinheit zum Steuern oder Regeln der Positioniervorrichtung kann in signaltechnischer Verbindung mit einer übergeordneten Maschinensteuerung stehen. Bevorzugt ist vorgesehen, dass Steuer- oder Regeleinheit zum Steuern oder Regeln der Positioniervorrichtung in die Maschinensteuerung integriert ist.

Es kann vorgesehen sein, dass die Vielzahl von einzeln aktivierbaren Leuchtdioden in Form einer Millimeter-Skala angeordnet und ausgebildet ist. Das heißt, die Milimeter-Skala selbst dient zur Anzeige einer genauen Position und es können mit dieser Millimeter-Skala unterschiedliche Farben angezeigt werden.

Bevorzugt ist allerdings vorgesehen, dass benachbart zur, vorzugsweise oberhalb der, Vielzahl von einzeln aktivierbaren Leuchtdioden eine, vorzugsweise selbst Leuchtdioden aufweisende, Millimeter-Skala angeordnet ist. Das heißt, es ist einerseits ein LED-Streifen mit den farbigen Leuchtdioden und andererseits eine eigenständiger LED-Streifen in Form einer beleuchtbaren Millimeter-Skala, vorzugsweise oberhalb, vorgesehen. Bevorzugt sind der LED-Streifen mit den farbigen Leuchtdioden und der LED-Streifen mit der Millimeter-Skala parallel zueinander und horizontal ausgerichtet. Diese beiden LED-Streifen können separat oder gemeinsam angesteuert werden. Es ist möglich, dass die Millimeter-Skala und die Vielzahl von einzeln (farbig) aktivierbaren Leuchtdioden in einem gemeinsamen, flexiblen Hülle integriert sind und somit einen gemeinsamen LED-Streifen bilden.

Mit der Millimeter-Skala ist eine besonders genaue und übersichtliche Positionierung der Spannmittel möglich. Bevorzugt ist vorgesehen, dass die Millimeter-Skala eine Vielzahl von jeweils einen Millimeter voneinander beabstandeten, parallel zueinander ausgerichteten Millimeterstrichen aufweist. Besonders bevorzugt ist vorgesehen, dass - bis auf jeden fünften oder jeden zehnten Millimeterstrich - die einzelnen Millimeterstriche die gleiche Länge aufweisen.

Wenn eine solche Millimeter-Skala vorhanden ist, kann vorgesehen sein, dass die Striche der Millimeter-Skala einzeln ansteuerbar sind und gegebenenfalls auch einzeln derart ansteuerbar sind, dass sie Licht unterschiedlicher Wellenlängen emittieren können. Bevorzugt ist allerdings vorgesehen, dass zusätzlich zur Millimeter-Skala (welche dann bevorzugt nur zur Anzeige der Sollposition dient) ein weiterer LED-Streifen angeordnet ist, über welchen zusätzliche Informationen (wie Spannmitteltyp, Sollausrichtung, Spannstatus) anzeigbar sind.

Schutz wird auch begehrt für eine Bearbeitungsmaschine, insbesondere CNC-Bearbeitungsmaschine, mit einer Bearbeitungsvorrichtung zum Bearbeiten eines, insbesondere plattenförmigen, Werkstücks und einer erfindungsgemäßen Spannvorrichtung.

Um die Bearbeitung eines Werkstücks bei an der Spannvorrichtung festgespanntem Werkstück durchzuführen, kann bevorzugt vorgesehen sein, dass die Bearbeitungsvorrichtung zumindest ein Bearbeitungswerkzeug, beispielsweise einen Fräser, aufweist, wobei die Bearbeitungsvorrichtung mitsamt dem Bearbeitungswerkzeug relativ zum Maschinenrahmen der Spannvorrichtung bewegbar ist, vorzugsweise am Maschinenrahmen bewegbar gelagert ist.

Bevorzugt ist vorgesehen, dass eine solche Bearbeitungsmaschine eine Maschinensteuerung aufweist. Durch ein in der Maschinensteuerung hinterlegtes Programm wird dann in einem Bearbeitungsmodus das Werkstück in Abhängigkeit von vorgegebenen CAD-Daten (CAD - Computer-aided Design) bearbeitet (CAM - computer-aided manufacturing).

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: perspektivisch eine CNC-Bearbeitungmaschine mit einer Bearbeitungsvorrichtung und einer Spannvorrichtung,
- Fig. 2a: eine Konsole samt Spannelementen in einer Seitenansicht mit einem LED-Streifen,
- Fig. 2b: einen Querschnitt durch die Konsole gemäß Fig. 2a,
- Fig. 3a: eine Konsole samt Spannelementen in einer Seitenansicht mit einem LED-Streifen und einer separaten Millimeter-Skala,
- Fig. 3b: einen Querschnitt durch die Konsole gemäß Fig. 3a,
- Fig. 4 bis 6: die einzelnen Spannelemente aus Fig. 2a im Detail,
- Fig. 7 bis 9: die einzelnen Spannelemente aus Fig. 3a im Detail,
- Fig. 10 + 11: perspektivisch zwei unterschiedliche Spannmitteltypen und
- Fig. 12: die Konsole samt Spannelementen wie in Fig. 3a mit zusätzlich dargestelltem Werkstück.

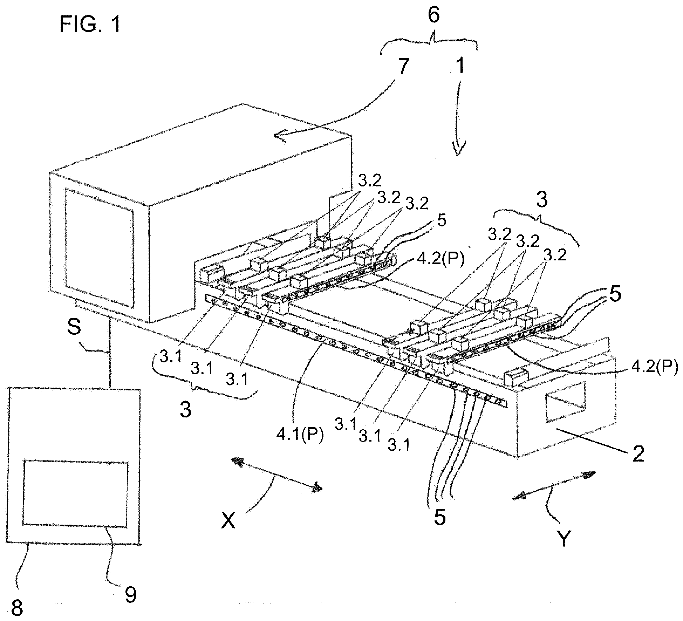

In Fig. 1 ist perspektivisch und schematisch eine Bearbeitungsmaschine 6, insbesondere eine CNC-Bearbeitungsmaschine, zum Bearbeiten eines, insbesondere plattenförmigen, Werkstücks W dargestellt. Das Werkstück W ist hier nicht dargestellt. Die Bearbeitungsmaschine 6 weist eine Bearbeitungsvorrichtung 7 und eine Spannvorrichtung 1 auf. Das Werkstück W liegt im festgespannten Zustand auf der Spannvorrichtung 1 auf und wird an dieser fixiert. Die Bearbeitungsvorrichtung 7 weist zumindest ein (hier nicht dargestelltes) Bearbeitungswerkzeug (z. B. Fräser, Schleifer, Bohrer, usw.) auf. Die Bearbeitungsvorrichtung 7 ist in einer ersten Richtung X (entspricht der Maschinenlängsachse) entlang der Spannvorrichtung 1 bewegbar, wobei über das Bearbeitungswerkzeug das Werkstück W bearbeitbar ist.

Die Spannvorrichtung 1 weist einen Maschinenrahmen 2, mehrere Spannmittel 3 und eine Positioniervorrichtung 4 auf. Die Spannmittel 3 sind als Konsolen 3.1 und als Spannelemente 3.2 ausgebildet. Die Konsolen 3.1 (in diesem Fall sechs an der Zahl) sind als profilförmige Träger ausgebildet und sind am Maschinenrahmen 2 befestigbar. Die Konsolen 3.1 sind in der ersten Richtung X entlang dem Maschinenrahmen 2 bewegbar. Die Spannelemente 3.2 (vorzugsweise als Vakuum-Spannsauger ausgebildet) sind über die Konsolen 3.1 indirekt am Maschinenrahmen 2 befestigt. Die Spannelemente 3.2 (in diesem Fall zwölf an der Zahl) sind in der zweiten Richtung Y entlang der Konsolen 3.1 bewegbar. Die zweite Richtung Y ist rechtwinkelig zur ersten Richtung X.

Die Positionierung der Spannmittel 3 am Maschinenrahmen 2 erfolgt über eine Positioniervorrichtung 4. Die Positioniervorrichtung 4 weist eine Konsolen-Positioniervorrichtung 4.1 und/oder eine Spannelement-Positioniervorrichtung 4.2 auf. Jede Positioniervorrichtung 4 weist eine Vielzahl von, vorzugsweise regelmäßig voneinander beabstandeten, Leuchtdioden 5 auf. Besonders bevorzugt ist die Vielzahl von Leuchtdioden 5 in Form eines oder mehrerer LED-Streifen ausgebildet.

Die Konsolen-Positioniervorrichtung 4.1 zur Positionierung der Konsolen 3.1 ist in diesem Fall an einer Seitenfläche des Maschinerahmens 2 angeordnet, sie kann aber auch an der Oberseite des Maschinenrahmens 2 angeordnet sein. In Abhängigkeit wenigstens eines über die Konsolen-Positioniervorrichtung 4.1 angezeigten Soll- oder Istparameters P werden die einzelnen Konsolen 3.1 entlang dem Maschinenrahmen 2, vorzugsweise händisch, in der ersten Richtung X verschoben und entsprechend fixiert.

Die Spannelement-Positioniervorrichtung 4.2 zur Positionierung der Spannelemente 3.2 ist in diesem Fall an einer Seitenfläche einer Konsole 3.1 angeordnet, sie kann aber auch an der Oberseite der Konsole 3.1 angeordnet sein. Bevorzugt ist vorgesehen, dass an jeder Konsole 3.1 eine Spannelement-Positioniervorrichtung 4.2 angeordnet ist (nicht dargestellt). In Abhängigkeit wenigstens eines über die Spannelement-Positioniervorrichtung 4.2 angezeigten Soll- oder Istparameters P werden die einzelnen Spannelemente 3.2 entlang den Konsolen 3.1, vorzugsweise händisch, in der zweiten Richtung Y verschoben und entsprechend fixiert.

Mit dieser Positioniervorrichtung 4 ist es also möglich, dass ein Bediener praktisch mit einem Blick erkennt, ob sich alle Spannmittel 3 (Konsolen 3.1 sowie Spannelemente 3.2) am richtigen Platz befinden.

Die Bearbeitungsmaschine 6 weist eine schematisch dargestellte Maschinensteuerung 8 auf. In die Maschinensteuerung 8 ist eine Steuer- oder Regeleinheit 9 zum Steuern oder Regeln der Positioniervorrichtung 4 integriert (können auch separat voneinander ausgebildet sein). Von der Maschinensteuerung 8 oder von der Steuer- oder Regeleinheit 9 sind CAD-Daten des zu bearbeitenden Werkstücks W abrufbar. In Abhängigkeit dieser Daten sind die Leuchtdioden 5 der Positioniervorrichtung 4 von der Steuer- oder Regeleinheit 9 ansteuerbar und entsprechend aktivierbar. Es werden also entsprechend Steuersignale S zum Anzeigen wenigstens eines Soll- oder Istparameters P an die Positioniervorrichtung 4 übermittelt.

In den nachfolgenden Figuren ist jeweils eine Spannelement-Positioniervorrichtung 4.2 dargestellt. Zur Vereinfachung wird aber immer allgemein eine Positioniervorrichtung 4 beschrieben, zumal sämtliche Funktionen und technischen Merkmale auch sinngemäß auf eine Konsolen-Positioniervorrichtung 4.1 übertragbar sind und für diese gelten.

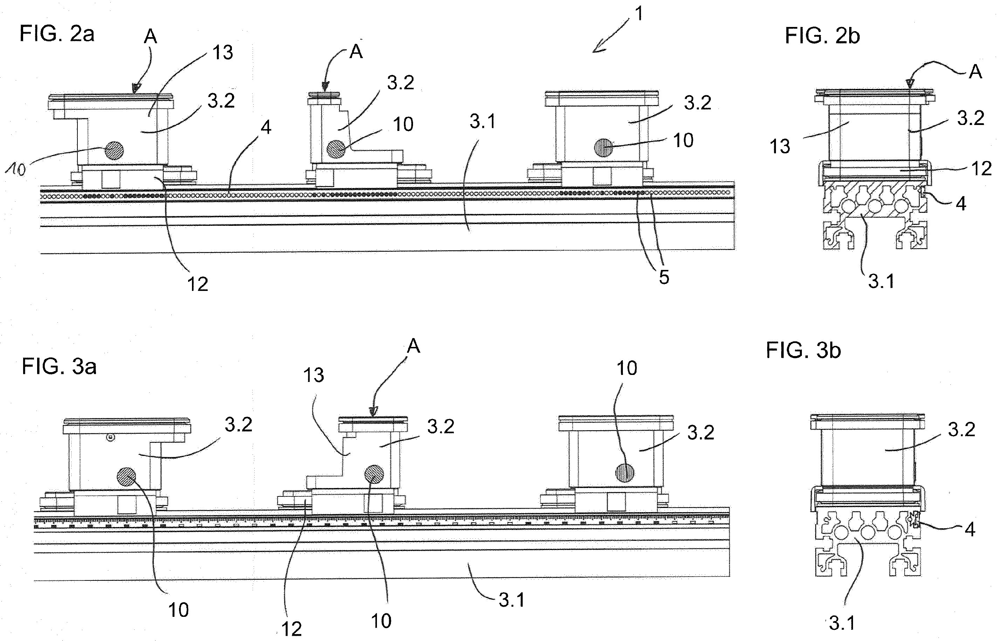

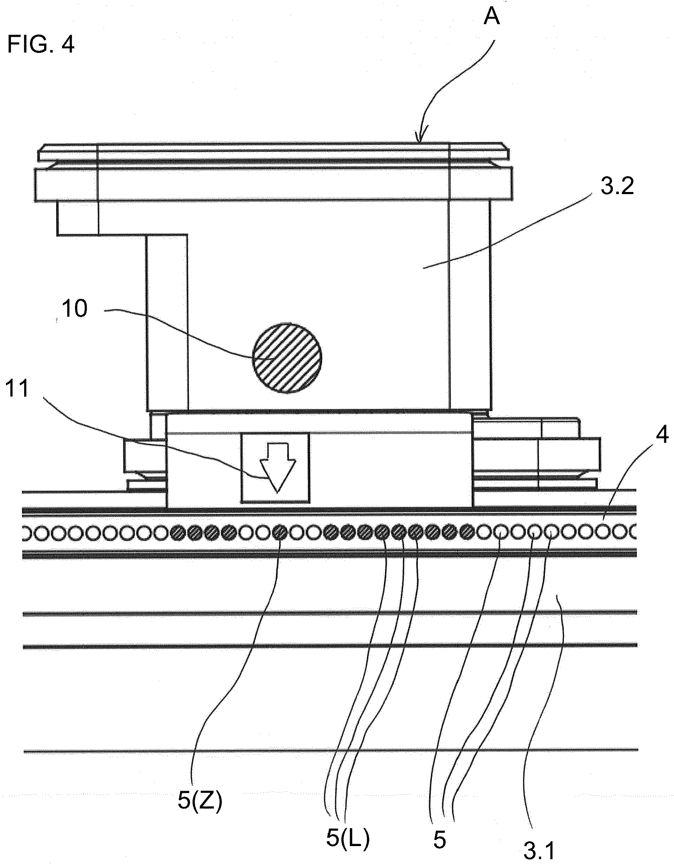

Fig. 2a zeigt in einer Seitenansicht eine Konsole 3.1 mit drei verschiedenen, auf der Konsole 3.1 angeordneten Spannelementen 3.2. Alle drei dargestellten Spannelemente 3.2 sind als Vakuum-Spannsauger ausgebildet. Jeder dieser drei dargestellten Spannelemente 3.2 bildet einen anderen Spannmitteltyp, was bereits durch die unterschiedliche Form und Spanngröße der Auflagefläche A erkennbar ist. Zudem wird der Spannmitteltyp durch ein Identifikationsmittel 10 signalisiert. Jeder dieser drei Identifikationsmittel 10 weist eine andere Farbe auf. Diese unterschiedliche Farbe ist durch die unterschiedliche Schraffierung der Identifikationsmittel veranschaulicht. Positioniervorrichtung 4 ist als LED-Streifen ausgebildet. Zu den Details der Positioniervorrichtung 4 und der einzeln aktivierbaren Leuchtdioden 5 wird in den weiter unter beschriebenen Fig. 4, 5 und 6 eingegangen.

In Fig. 2b ist ein Querschnitt durch eine Konsole 3.1 samt daran angeordnetem Spannelement 3.2 dargestellt. Die Oberseite des Spannelements 3.2 bildet eine Auflagefläche A (kann auch als Ansaugfläche bezeichnet werden) für ein Werkstück W. Es ist erkennbar, dass die Positioniervorrichtung 4 einen, vorzugsweise flexiblen, LED-Streifen aufweist, welcher in einer Vertiefung der profilförmigen Konsole 3.1 angeordnet ist. Das Spannelement 3.2 selbst weist einen Sockel 12 und einen Spannkopf 13 auf. Über den Sockel 12 ist das Spannelement 3.2 an der Konsole 3.1 geführt verfahrbar. Der Spannkopf 13 weist die Auflagefläche A auf. Bevorzugt ist vorgesehen, dass der Spannkopf 13 am Sockel 12, vorzugsweise um eine vertikale Achse, drehbar gelagert ist. Durch eine Drehung des Spannkopfs 13 relativ zum Sockel 12 kann die Ausrichtung der Auflagefläche A entsprechend der Sollausrichtung geändert werden. Bevorzugt sind zwei oder vier Standard-Sollausrichtungen vorgesehen, die sich jeweils durch eine 180°-Drehung oder durch eine 90°-Drehung voneinander unterscheiden. An jeder dieser Standard-Sollausrichtungen kann der Spannkopf 13 am Sockel 12, vorzugsweise lösbar, einrasten.

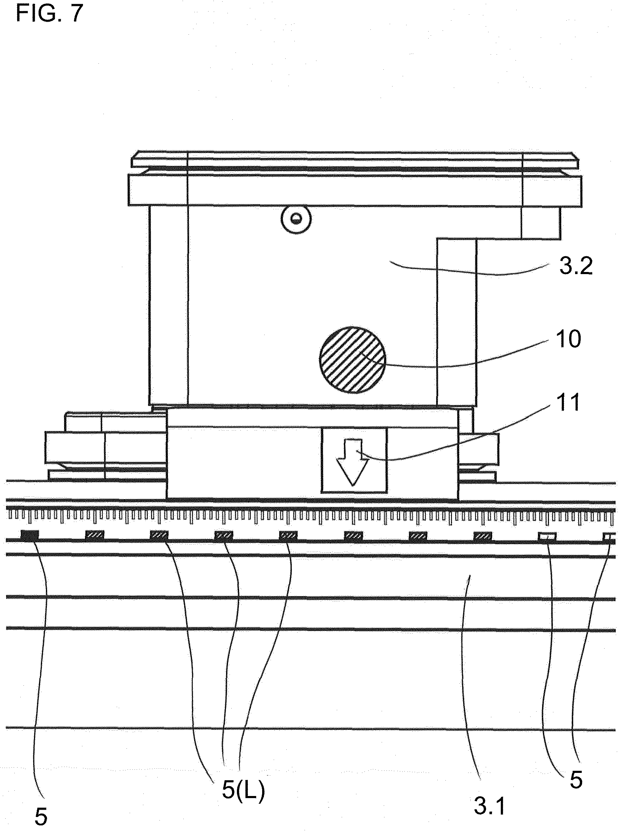

Fig. 3a zeigt in einer Seitenansicht wiederum eine Konsole 3.1 mit drei daran angeordneten Spannelementen 3.2 mit Identifikationsmitteln 10. In diesem Fall weist die Positioniervorrichtung 4 eine Millimeter-Skala für die exakte Positionierung der einzelnen Spannelemente 3.2 und eine (darunter angeordnete) Vielzahl von einzeln aktivierbaren Leuchtdioden 5 auf, mit welchen andere Soll- oder Istparameter P außer der Sollposition anzeigbar sind. Zu den Details der Positioniervorrichtung 4, der Spannelemente 3.2 und der einzeln aktivierbaren Leuchtdioden 5 wird in den weiter unter beschriebenen Fig. 7, 8 und 9 eingegangen. Die Millimeter-Skala kann - je nach Ausführung - selbst Leuchtdioden aufweisen, um zumindest einzelne Millimeter-Striche hervorzuheben.

Fig. 3b zeigt die Konsole 3.1 gemäß Fig. 3a in einem Querschnitt.

Fig. 4 zeigt jenes Spannelement 3.2 im Detail, welches in Fig. 2a ganz links dargestellt ist. Am Spannelement 3.2 ist ein Identifikationsmittel 10 angebracht, welches den Spannmitteltyp repräsentiert. Dieses Identifikationsmittel 10 ist in diesem Fall farbig und kreisförmig ausgebildet. Die Schraffierung von links unten nach rechts entspricht einer bestimmten Farbe, mithin einer wahrnehmbaren elektromagnetischen Strahlung mit einer Wellenlänge im sichtbaren Bereich. Dieses Identifikationsmittel 10 kann auf das Spannelement 3.2 zum Beispiel aufgedruckt oder aufgeklebt sein. An der Konsole 3.1 ist eine Positioniervorrichtung 4 mit einer Vielzahl von einzeln aktivierbaren Leuchtdioden 5, vorzugsweise in Form eines flexiblen LED-Streifens, angebracht. Wie in Fig. 4 ersichtlich ist, sind in diesem Bereich insgesamt vierzehn Leuchtdioden 5 aktiviert. Dies ist dadurch ersichtlich, dass die Leuchtdioden 5 schraffiert dargestellt sind. Die restlichen Leuchtdioden 5 (ohne Schraffierung) sind in diesem Fall nicht aktiviert und emittieren daher aktiv kein Licht. In der Darstellung gemäß Fig. 4 sind die aktivierten Leuchtdioden 5 jeweils mit einer Schraffierung von links unten nach rechts oben dargestellt. Diese Schraffierung veranschaulicht, dass das von diesen Leuchtdioden 5 emittierte Licht L dieselbe Wellenlänge aufweist. Konkret können diese Leuchtdioden 5 also zum Beispiel blau leuchten (Wellenlängenbereich zwischen 430 und 490 nm). Die von den Leuchtdioden 5 emittierte Wellenlänge signalisiert, welcher Spannmitteltyp in diesem Bereich der Konsole 3.1 anzubringen ist. Mithin gibt die emittierte Farbe an, welcher Soll- oder Istparameter P in Form eines Spannmitteltyps anzuwenden ist. Da am in Fig. 3 dargestellten Spannelement 3.2 ein Identifikationsmittel 10 mit derselben Farbe (veranschaulicht durch dieselbe Schraffierung von links unten nach rechts oben) angebracht ist, stimmt der tatsächlich angebrachte Spannmitteltyp mit dem durch die Positioniervorrichtung 4 durch den Soll- oder Istparameter P vorgegebenen Spannmitteltyp überein. Es ist also der korrekte Typ des Spannelements 3.2 angebracht.

Zusätzlich gehen aus der Positioniervorrichtung 4 noch weitere Informationen hervor. Die Leuchtdioden 5 sind in einem bestimmten Bereich aktiviert. Die Länge dieses Bereichs gibt an, dass genau oberhalb das Spannelement 3.2 positioniert werden soll. Zudem sind in diesem Bereich vier Leuchtdioden 5 inaktiv, dazwischen ist eine einzelne Leuchtdiode 5 aktiv. Diese eine Leuchtdiode 5 gibt die Zentralposition Z der Auflagefläche A des Spannelements 3.2 an. Am Spannelement 3.2 ist ein korrespondierendes Zentralpositions-Identifikationsmittel 11, vorzugsweise in Form eines Pfeils, angebracht. Wenn dieses Zentralpositions-Identifikationsmittel 11 genau mittig oberhalb der einzelnen, die Zentralposition Z bestimmenden Leuchtdiode 5 angebracht ist, stimmt neben dem Spannmitteltyp und dem Anbringbereich des Spannelements 3.2 auch die Position und Ausrichtung der Auflagefläche A des Spannelements 3.2. Durch Blinken der aktiven Leuchtdioden 5 kann zusätzlich eine weitere Information signalisiert werden. So kann durch Blinken signalisiert werden, dass das Spannmittel noch nicht fixiert ist. Sobald die Fixierung erfolgt ist, hört dann das Blinken auf.

Beim Ausführungsbeispiel gemäß Fig. 4 beträgt der Abstand zwischen den Mittelpunkten benachbarter Leuchtdioden 5 in etwa 5 mm. Um eine genauere Positionierung zu ermöglichen, können auch zwei benachbarte Leuchtdioden 5 die Zentralposition Z bestimmen. Wenn dem so ist, soll das Spannelement 3.2 so positioniert werden, dass das Zentralpositions-Identifikationsmittel 11 genau zwischen die beiden benachbarten Leuchtdioden 5 gerichtet ist. Dadurch wird eine Positioniergenauigkeit bzw. Auflösung von 2,5 mm erreicht.

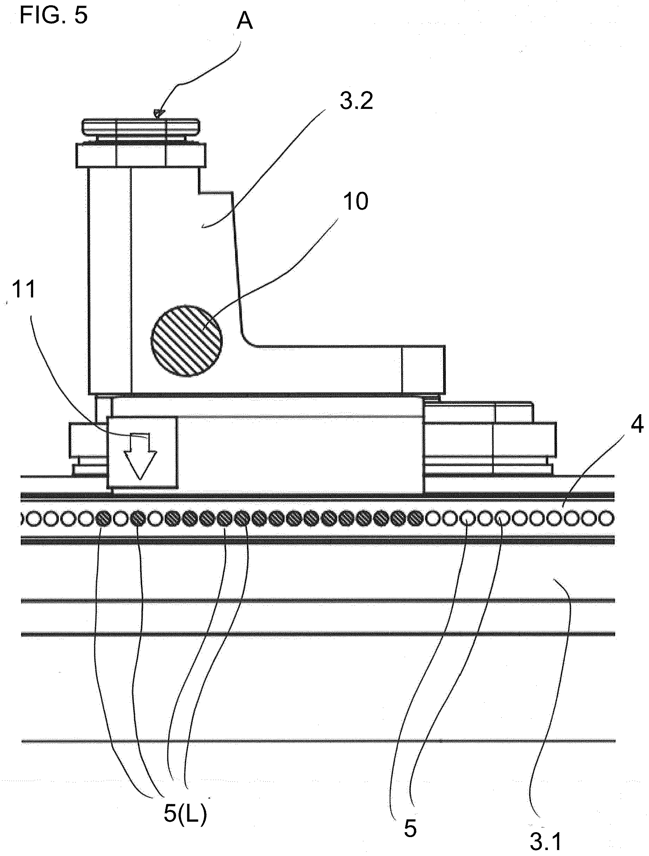

Fig. 5 zeigt jenes Spannelement 3.2 im Detail, welches in Fig. 2a in der Mitte dargestellt ist. Die Auflagefläche A dieses Spannelements 3.2 ist kleiner, es weist also eine andere Sollgröße auf. Durch das Identifikationsmittel 10 wird der Spannmitteltyp (und/oder die Sollgröße) signalisiert. In diesem Fall weist das Identifikationsmittel 10 eine andere Farbe auf, was durch die Schraffierung von rechts unten nach links oben erkennbar ist. Passend dazu sind (in diesem Fall siebzehn) Leuchtdioden 5 der Positioniervorrichtung 4 aktiviert und emittieren Licht L mit einer bestimmten Wellenlänge. Die Wellenlänge des emittierten Lichts L dieser Leuchtdioden 5 stimmt im Wesentlichen mit der Wellenlänge überein, welche von der Farbe des Identifikationsmittels 10 am Spannelement 3.2 ausgeht (siehe selbe Schraffierung). Konkret können diese Leuchtdioden 5 also zum Beispiel rot leuchten (Wellenlängenbereich zwischen 640 und 780 nm). Auch bei dieser Variante signalisiert wieder eine einzelne Leuchtdiode 5 die Zentralposition Z der Auflagefläche A.

Um eine eindeutige Unterscheidung zu ermöglichen, ist bevorzugt vorgesehen, dass sich die Wellenlängen (z. B. zwischen den in Fig. 2a ganz links aktivierten Leuchtdioden 5 und die in Fig. 2a in der Mitte aktivierten Leuchtdioden 5) um wenigstens 10 nm, vorzugsweise um wenigstens 20 nm, besonders bevorzugt um wenigstens 30 nm, voneinander unterscheiden. So kann mit einem Blick erkannt werden, dass durch die eindeutig unterschiedliche Farbe ein anderer Soll- oder Istparameter P (in diesem Fall Spannmitteltyp) signalisiert wird.

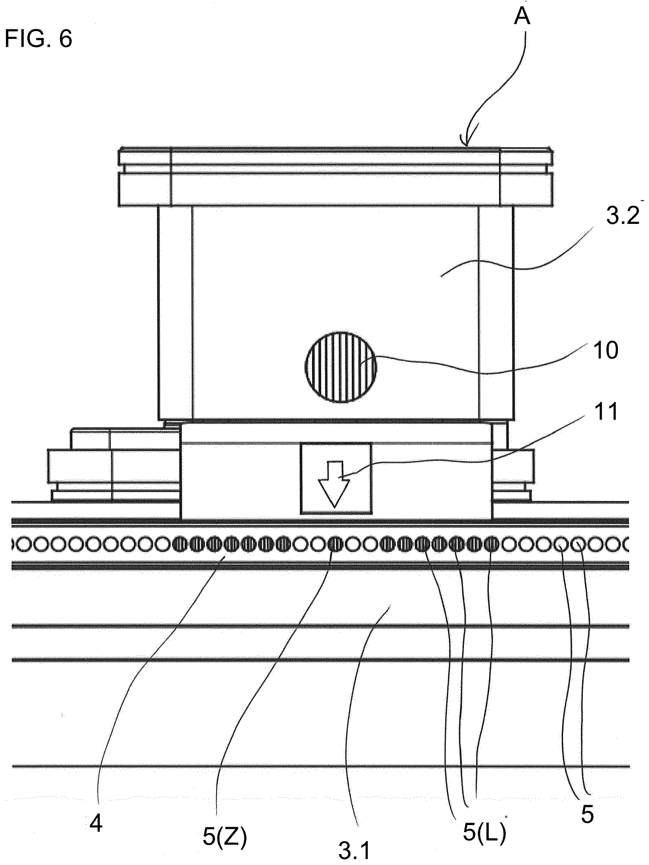

Fig. 6 zeigt jenes Spannelement 3.2 im Detail, welches in Fig. 2a ganz rechts dargestellt ist. Durch das Identifikationsmittel 10 wird der Spannmitteltyp (und/oder die Sollgröße) signalisiert. In diesem Fall weist das Identifikationsmittel 10 wiederum eine andere Farbe auf, was durch die vertikale Schraffierung erkennbar ist. Passend dazu sind (in diesem Fall fünfzehn) Leuchtdioden 5 der Positioniervorrichtung 4 aktiviert und emittieren Licht L mit einer bestimmten Wellenlänge. Die Wellenlänge des emittieren Lichts L dieser Leuchtdioden 5 stimmt im Wesentlichen mit der Wellenlänge überein, welche von der Farbe des Identifikationsmittels 10 am Spannelement 3.2 ausgeht (siehe selbe Schraffierung). Konkret können diese Leuchtdioden 5 also zum Beispiel gelb leuchten (Wellenlängenbereich zwischen 570 und 600 nm). Die einzelne aktive Leuchtdiode 5 gibt wiederum die Zentralposition Z der Auflagefläche A des Spannelements 3.2 an. Am Spannelement 3.2 ist ein korrespondierendes Zentralpositions-Identifikationsmittel 11 angebracht.

Fig. 7 zeigt jenes Spannelement 3.2 im Detail, welches in Fig. 3a ganz links dargestellt ist. In diesem Fall weist die Positioniervorrichtung 4 eine Millimeter-Skala und eine Vielzahl von Leuchtdioden 5 auf. Die (horizontal angeordnete) Millimeter-Skala dient zur Feinpositionierung der Spannmittel 3. Hier können zum Beispiel bestimmte Millimeterstriche beleuchtet sein (nicht veranschaulicht), über welche dann die Positionierung über das Zentralpositions-Identifikationsmittel 11 erfolgt. Hier kann eine Auflösung von 0,5 mm für die Feinpositionierung erreicht werden, indem zwei benachbarte Millimeterstriche beleuchtet werden. Die separat unterhalb der Millimeter-Skala angeordneten Leuchtdioden 5 signalisieren den Anbringbereich und den Spannmitteltyp. Die (in diesem Fall sieben) aktivierten Leuchtdioden 5 leuchten in einer bestimmten Farbe (siehe Schraffierung), welche mit der Farbe des am Spannelements 3.2 angebrachten Identifikationsmittels 10 übereinstimmt. Der durch die Wellenlänge der Leuchtdioden 5 signalisierte Soll- oder Istparameter P entspricht also hier dem Spannmitteltyp. Die beiden ganz rechts erkennbaren Leuchtdioden 5 sind nicht aktiviert. Die ganz rechts dargestellte Leuchtdiode 5 ist aktiviert und leuchtet in einer anderen Farbe, emittiert also Licht L mit einer anderen Wellenlänge als die anderen Leuchtdioden. Diese eine Leuchtdiode 5 signalisiert den Soll- oder Istparameter P Sollausrichtung. In einem Vergleich mit Fig. 4 ist erkennbar, dass in Fig. 7 und in Fig. 4 derselbe Spannmitteltyp (selbe Größe und selbe Form) verwendet wird. Die Ausrichtung des Spannkopfs 13 ist aber um 180° verdreht. Die einzelne andersfarbig leuchtende Leuchtdiode 5 signalisiert in Fig. 7 also, wie das Spannelement 3.2 (im Speziellen dessen Spannkopf 13) ausgerichtet sein soll.

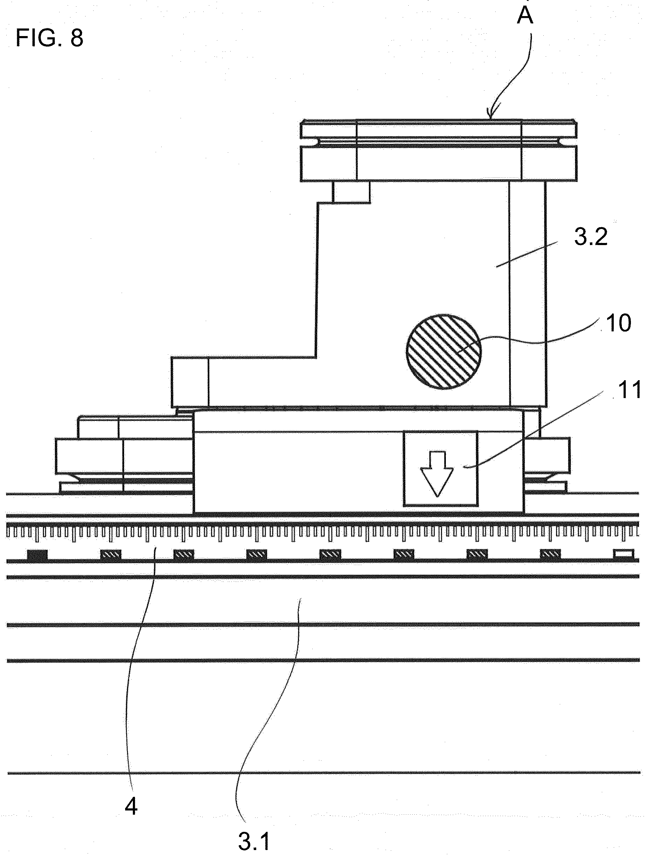

Fig. 8 zeigt jenes Spannelement 3.2 im Detail, welches in Fig. 2a in der Mitte dargestellt ist. Hier wird von den (in diesem Fall sieben) Leuchtdioden 5 wiederum Licht L mit einer anderen Wellenlänge (siehe Schraffierung von links oben nach rechts unten) emittiert, welche mit der Farbe des am Spannelement 3.2 angebrachten Identifikationsmittels 10 im Wesentlichen übereinstimmt. Die Auflagefläche A des Spannelements 3.2 weist eine andere (kleinere) Sollgröße auf.

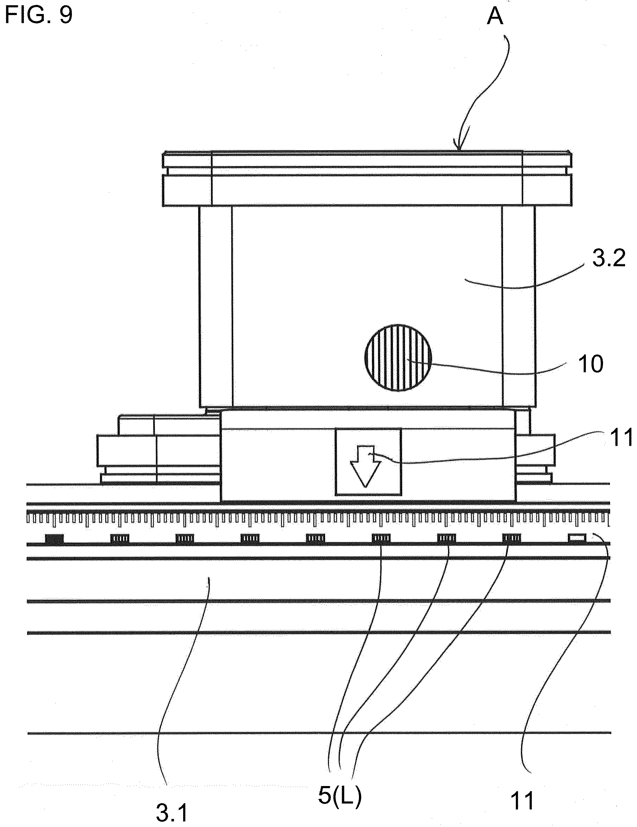

Fig. 9 zeigt jenes Spannelement 3.2 im Detail, welches in Fig. 2a ganz rechts dargestellt ist. Wiederum geben die aktivierten Leuchtdioden 5 den Anbringbereich und den Spannmitteltyp an.

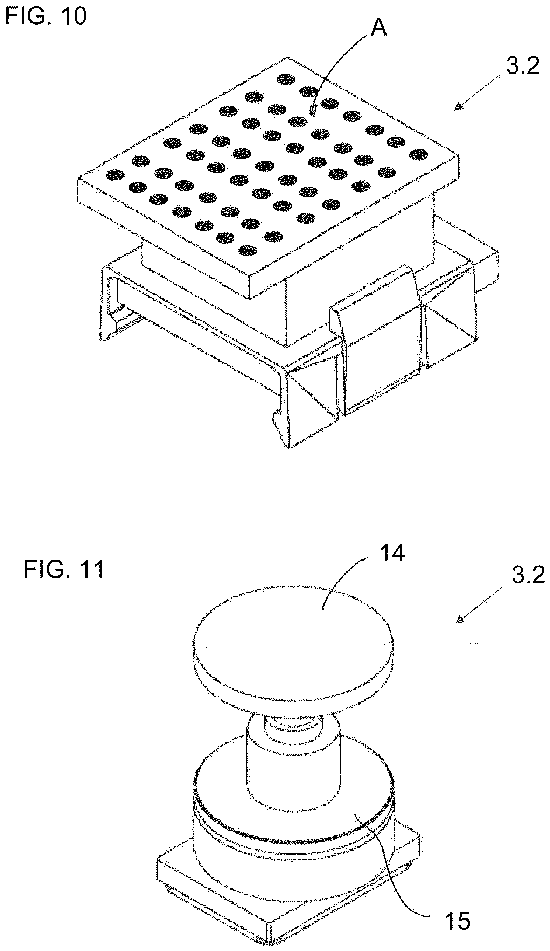

In Fig. 10 ist perspektivisch ein Spannelement 3.2 in Form eines Saugspanners dargestellt. Es ist erkennbar, dass in der Auflagefläche A eine Vielzahl von Sauglöchern ausgebildet ist, mit welchen ein Werkstück W an die Auflagefläche A angesaugt und somit festgespannt werden kann.

Fig. 11 zeigt in einer perspektivischen Darstellung ein Spannelement 3.2 in Form eines vertikalen Rahmenspanners. Das Werkstück W zwischen dem Klemmkopf 14 und dem Klemmsockel 15 eingespannt werden.

Die in den Fig. 10 und 11 dargestellten Spannelemente 3.2 entsprechen also unterschiedlichen Spannmitteltypen, welche aber jeweils an einer Konsole 3.1 über eine entsprechende Befestigungsvorrichtung anbringbar sind.

Im Folgenden seien noch beispielhaft Ablaufschritte beschrieben, die mit einer Bearbeitungsmaschine 6 samt Spannvorrichtung 1 durchgeführt werden können.

Wenn über die Bearbeitungsmaschine 6 ein neues Werkstück W bearbeitet werden soll, wird zunächst an der Maschinensteuerung 8 der Spannmodus eingeschaltet. Dies bedeutet, dass keine Bearbeitung stattfindet, sondern dass eben ein neues Werkstück W an der Spannvorrichtung 1 angebracht werden soll. Das festzuspannende Ausgangs-Werkstück (Rohling) hat bekannte Maße, wobei aus diesem Ausgangs-Werkstück ein End-Werkstück mit einer bestimmten Form herausgearbeitet werden soll. Die Form dieses End-Werkstücks basiert auf CAD-Daten. In Abhängigkeit dieser CAD-Daten werden dann über die Steuer- oder Regeleinheit 9 die einzelnen Leuchtdioden 5 der LED-Leuchtstreifen angesteuert. Zunächst werden die Konsolen 3.1 entsprechend der auf der Konsolen-Positioniervorrichtung 4.1 angezeigten Soll- oder Istparameter P positioniert und fixiert. Dann werden die Spannelemente 3.2 entsprechend der Soll- oder Istparameter P (Spannmitteltyp, Sollausrichtung) positioniert und fixiert (Spannstatus wird entsprechend angezeigt). Sobald alle Spannmittel 3 (Konsolen **3.1** und Spannelemente 3.2) die richtige Position relativ zum Maschinengehäuse 2 eingenommen haben und jeweils den Spannstatus "fixiert" haben, kann über die LED-Leuchtstreifen der Maschinenstatur "bereit" angezeigt werden. Dies signalisiert dem Benutzer, dass er in der Maschinensteuerung auf Bearbeitungsmodus weiterschalten kann. In diesem Bearbeitungsmodus wird dann von der Bearbeitungsvorrichtung 7 das Werkstück W basierend auf den CAD-Daten bearbeitet. Nach der Bearbeitung wird das fertige Werkstück W wieder von der Spannvorrichtung 1 gelöst und es kann wieder ein neuer Zyklus beginnen.

Bei großen Werkstücken W kann sich die gesamte Bearbeitungsmaschine 6 entweder im Spannmodus oder im Bearbeitungsmodus befinden. Vor allem bei kleineren Werkstücken W kann die Spannvorrichtung 1 auch in wenigstens zwei Felder unterteilt werden. Dadurch ist ein Pendelbetrieb möglich. Das heißt, während in einem Feld die Bestückung mit den Spannmitteln 3 erfolgt, wird im anderen Feld die Bearbeitung des Werkstücks W mit der Bearbeitungsvorrichtung 7 durchgeführt. über die Leuchtdioden kann dabei entsprechend signalisiert werden, dass sich das eine Feld **z.** B. durch gelbe Leuchtdioden im Spannmodus befindet, während sich das andere Feld z. B. durch grüne Leuchtdioden im Bearbeitungsmodus befindet.

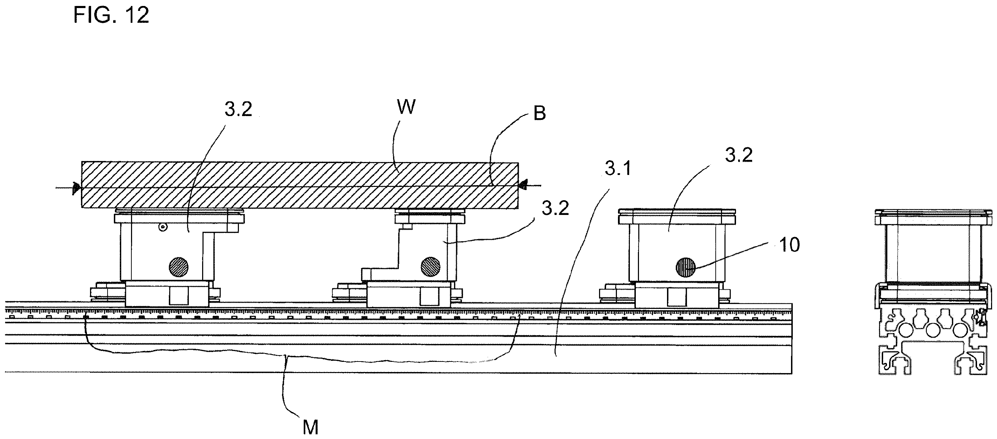

Ein weiteres Ausführungsbeispiel ist in Fig. 12 gezeigt. Die Stellung der Spannelemente 3.2 entspricht dabei jener der Fig. 3a. Zusätzlich ist auf der Auflagefläche A ein Werkstück W angeordnet. Das Werkstück W hat eine bestimmte Breite B (in diesem Fall eine Breite B von etwa 230 mm) und eine bestimmte Länge (rechtwinkelig zur Blattebene gesehen). Wenn die Länge von der Breite abweicht, so kann es vorkommen, dass das Werkstück W in einer falschen Orientierung auf den Auflageflächen A der Spannelemente 3.2 angeordnet sein kann. Um eine solche falsche Orientierung oder eine falsche Platzierung entlang einer Achse (X oder Y) zu verhindern, kann über die Millimeter-Skala (oder über die Vielzahl von Leuchtdioden 5) angezeigt werden, in welchem Bereich das Werkstück W zu platzieren ist. In diesem Fall leuchtet die Millimeter-Skala nur im gesamten Bereich M. Das Werkstück W ist also korrekt platziert. Wenn das Werkstück W falsch platziert wäre (z. B. um 90° falsch ausgerichtet), so würde dies einem Bediener aufgrund des nicht mit der Breite B zusammenpassenden Bereichs M auffallen. Ein Bediener könnte also das Werkstück W noch entsprechend richtig positionieren (drehen) bzw. verschieben. In diesem Fall bildet der Bereich M einen Soll- oder Istparameter P, wobei dieser Soll- oder Istparameter P eine Sollposition und/oder Sollausrichtung des Werkstücks W auf den Spannmitteln 3 repräsentiert.

Die Grundidee der vorliegenden Erfindung liegt jedenfalls darin, dass durch in unterschiedlichen Farben leuchtende Leuchtdioden 5 einer Positioniervorrichtung 4 wenigstens ein Soll- oder Istparameter P für ein Spannmittel 3 signalisiert wird, welcher für einen Benutzer schnell und möglichst intuitiv erkennbar ist. Dadurch kann das Bestücken der Spannvorrichtung 1 mit den Spannmitteln 3 schneller, genauer und mit weniger Fehlern erfolgen.

### Bezugszeichenliste:

- 1: Spannvorrichtung
- 2: Maschinenrahmen
- 3: Spannmittel
- 3.1: Konsolen
- 3.2: Spannelemente
- 4: Positioniervorrichtung
- 4.1: Konsolen-Positioniervorrichtung
- 4.2: Spannelement-Positioniervorrichtung
- 5: Leuchtdioden
- 6: Bearbeitungsmaschine
- 7: Bearbeitungsvorrichtung
- 8: Maschinesteuerung
- 9: Steuer- oder Regeleinheit zum Steuern oder Regeln der Positioniervorrichtung
- 10: Identifikationsmittel
- 11: Zentralpositionis-Identifikationsmittel
- 12: Sockel
- 13: Spannkopf
- 14: Klemmkopf
- 15: Klemmsockel
- P: Soll- oder Istparameter
- L: Licht
- X: erste Richtung
- Y: zweite Richtung
- S: Steuersignal
- A: Auflagefläche
- Z: Zentralposition
- W: Werkstück
- B: Breite
- M: beleuchteter Bereich der Millimeter-Skala

## Patentansprüche

1. Spannvorrichtung (1) zum Festspannen eines zu bearbeitenden, insbesondere plattenförmigen, Werkstücks (W), mit
- einem Maschinenrahmen (2),
- wenigstens einem, relativ zum Maschinenrahmen (2) bewegbaren und mit dem Maschinenrahmen (2) verbindbaren Spannmittel (3), und
- wenigstens einer Positioniervorrichtung (4) zum Positionieren des wenigstens einen Spannmittels (3) relativ zum Maschinenrahmen (2), wobei die Positioniervorrichtung (4) eine Vielzahl von einzeln aktivierbaren Leuchtdioden (5) aufweist, wobei durch zumindest eine aktivierte Leuchtdiode (5) zumindest ein Soll- oder Istparameter (P) für das wenigstens eine Spannmittel (3) anzeigbar ist, wobei die Vielzahl von Leuchtdioden (5) derart ausgebildet ist, Licht (L) wenigstens zweier unterschiedlicher Wellenlängen im sichtbaren Wellenlängenbereich zu emittieren,
- wobei die Spannmittel (3) mehrere Konsolen (3.1) umfassen, welche in einer ersten Richtung (X) relativ zum Maschinenrahmen (2) bewegbar und am Maschinenrahmen (2) festlegbar sind, wobei die Spannmittel (3) mehrere Spannelemente (3.2) umfassen und die Spannelemente (3.2) ein Identifikationsmittel (10) zur Signalisierung eines Spannmitteltyps der Spannelemente (3.2) umfassen, wobei eine Farbe des Identifikationsmittels (10) mit einer emittierten Farbe der Vielzahl von Leuchtdioden (5) übereinstimmt, welche den Spannmitteltyp als einen Soll- oder Istparameter (P) des zumindest einen Soll- oder Istparameters (P) darstellt, und/oder
- wobei die Spannmittel (3) mehrere Konsolen (3.1) umfassen, welche in einer ersten Richtung (X) relativ zum Maschinenrahmen (2) bewegbar und am Maschinenrahmen (2) festlegbar sind, wobei die Spannmittel (3) mehrere Spannelemente (3.2) umfassen, welche in einer zweiten Richtung (Y) relativ zu den Konsolen (3.1) bewegbar und an den Konsolen (3.1) festlegbar sind, wobei die Vielzahl von Leuchtdioden (5) entlang der ersten Richtung (X) angeordnet ist.

2. Spannvorrichtung nach Anspruch 1, **dadurch gekennzeichnet, dass** die Spannmittel (3) Vakuum-Spannsauger, umfassen.

3. Spannvorrichtung nach Anspruch 2, **dadurch gekennzeichnet, dass** die Spannelemente (3.2) in einer zweiten Richtung (Y) relativ zu den Konsolen (3.1) bewegbar und an den Konsolen (3.1) festlegbar sind.

4. Spannvorrichtung nach einem der Ansprüche 1 bis 3, **dadurch gekennzeichnet, dass** die Vielzahl von Leuchtdioden (5) entlang einer geraden, vorzugsweise horizontal ausgerichteten, Linie angeordnet ist.

5. Spannvorrichtung nach einem der Ansprüche 1 bis 4, **dadurch gekennzeichnet, dass** die Leuchtdioden (5) - vorzugsweise jede der Leuchtdioden (5) - der Vielzahl von einzeln aktivierbaren Leuchtdioden (5) derart ausgebildet sind, jeweils Licht (L) nur einer bestimmten Wellenlänge zu emittieren oder dass die Leuchtdioden (5) - vorzugsweise jede der Leuchtdioden (5) - der Vielzahl von einzeln aktivierbaren Leuchtdioden (5) derart ausgebildet sind, Licht (L) wenigstens zweier unterschiedlicher Wellenlängen zu emittieren.

6. Spannvorrichtung nach Anspruch 5, **dadurch gekennzeichnet, dass** die Leuchtdioden (5) - vorzugsweise jede der Leuchtdioden (5) - der Vielzahl von einzeln aktivierbaren Leuchtdioden (5) als RGB-Leuchtdioden ausgebildet sind.

7. Spannvorrichtung nach Anspruch 2, **dadurch gekennzeichnet, dass** die Positioniervorrichtung (4) eine, vorzugsweise eine Vielzahl von Leuchtdioden (5) aufweisende, Konsolen-Positioniervorrichtung (4.1) zur Positionierung der Konsolen (3.1) und/oder eine, vorzugsweise eine Vielzahl von Leuchtdioden (5) aufweisende, Spannelement-Positioniervorrichtung (4.2) zur Positionierung der Spannelemente (3.2) aufweist.

8. Spannvorrichtung nach Anspruch 7, **dadurch gekennzeichnet, dass** die Konsolen-Positioniervorrichtung (4.1) zur Positionierung der Konsolen (3.1) am Maschinenrahmen (2), vorzugsweise an einer Seitenfläche des Maschinenrahmens (2), angeordnet ist, wobei in Abhängigkeit wenigstens eines über die Konsolen-Positioniervorrichtung (4.1) angezeigten Soll- oder Istparameters (P) die einzelnen Konsolen (3.1) entlang dem Maschinenrahmen (2), vorzugsweise händisch, in der ersten Richtung (X) verschiebbar und am Maschinenrahmen (2) fixierbar sind.

9. Spannvorrichtung nach Anspruch 7 oder 8, **dadurch gekennzeichnet, dass** die Spannelement-Positioniervorrichtung (4.2) zur Positionierung der Spannelemente (3.2) an wenigstens einer, vorzugsweise an jeder, Konsole (3.1) angeordnet ist, wobei in Abhängigkeit wenigstens eines über die Spannelement-Positioniervorrichtung (4.2) angezeigten Soll- oder Istparameters (P) die einzelnen Spannelemente (3.2) entlang der wenigstens einen Konsole (3.1), vorzugsweise händisch, in der zweiten Richtung (Y) verschiebbar und an der wenigstens einen Konsole (3.1) fixierbar sind.

10. Spannvorrichtung nach Anspruch 1 bis 9, **dadurch gekennzeichnet, dass** der zumindest eine Soll- oder Istparameter (P)
- eine Sollposition des wenigstens einen Spannmittels (3) und/oder
- eine Sollgröße des wenigstens einen Spannmittels (3) und/oder
- eine Sollausrichtung des wenigstens einen Spannmittels (3) und/oder
- einen Spannstatus des wenigstens einen Spannmittels (3) ist und/oder
- einen Maschinenstatus und/oder
- eine Sollposition oder Sollausrichtung des Werkstücks (W)
repräsentiert.

11. Spannvorrichtung nach einem der Ansprüche 1 bis 10, **dadurch gekennzeichnet, dass** die Vielzahl von einzeln aktivierbaren Leuchtdioden (5) in Form einer Millimeter-Skala angeordnet und ausgebildet ist oder dass benachbart zur, vorzugsweise oberhalb der, Vielzahl von einzeln aktivierbaren Leuchtdioden (5) eine, vorzugsweise selbst Leuchtdioden aufweisende, Millimeter-Skala angeordnet ist.

12. Spannvorrichtung nach Anspruch 11, **dadurch gekennzeichnet, dass** die Millimeter-Skala eine Vielzahl von jeweils einen Millimeter voneinander beabstandeten, parallel zueinander ausgerichteten Millimeterstrichen aufweist.

13. Spannvorrichtung nach einem der Ansprüche 1 bis 12, **dadurch gekennzeichnet, dass** die Vielzahl von einzeln aktivierbaren Leuchtdioden der Positioniervorrichtung (4) an dem wenigstens einen Spannmittel (3), vorzugsweise an jeder Konsole (3.1), und/oder am Maschinenrahmen (2) angeordnet ist.

14. Bearbeitungsmaschine (6) für die Holzbearbeitung, insbesondere CNC-Bearbeitungsmaschine, mit einer Bearbeitungsvorrichtung (7) zum Bearbeiten, insbesondere Fräsen, eines, insbesondere plattenförmigen, Werkstücks (W) und einer Spannvorrichtung (1) nach einem der Ansprüche 1 bis 13.

15. Bearbeitungsmaschine nach Anspruch 14, **dadurch gekennzeichnet, dass** die Bearbeitungsvorrichtung (7) zumindest ein Bearbeitungswerkzeug, beispielsweise einen Fräser, aufweist, wobei die Bearbeitungsvorrichtung (7) mitsamt dem Bearbeitungswerkzeug relativ zum Maschinenrahmen (2) der Spannvorrichtung (1) bewegbar ist, vorzugsweise am Maschinenrahmen (2) bewegbar gelagert ist.

## Claims

1. A clamping device (1) for fixedly clamping a, in particular plate-shaped, workpiece (W) to be machined, comprising
- a machine frame (2),
- at least one clamping means (3) which is moveable relative to the machine frame (2) and can be connected to the machine frame (2), and
- at least one positioning device (4) for positioning the at least one clamping means (3) relative to the machine frame (2), wherein the positioning device (4) has a plurality of individually activitable light emitting diodes (5), wherein at least one target or actual parameter (P) for the at least one clamping means (3) can be displayed by at least one activated light emitting diode (5),
wherein the plurality of light emitting diodes (5) is configured to emit light (L) of at least two different wavelengths in the visible wavelength range,
- wherein the clamping means (3) comprise a plurality of brackets (3.1) which are moveable in a first direction (X) relative to the machine frame (2) and can be fixed to the machine frame (2), wherein the clamping means (3) comprise a plurality of clamping elements (3.2) and the clamping elements (3.2) comprise a means of identification (10) for indicating the clamping means type of the clamping elements (3.2), wherein a colour of the means of identification (10) corresponds to a colour emitted by the plurality of light emitting diodes (5), which represents the clamping means type as a target or actual parameter (P) of the at least one target or actual parameter (P), and/or
- wherein the clamping means (3) comprise a plurality of brackets (3.1) which are moveable in a first direction (X) relative to the machine frame (2) and can be fixed to the machine frame (2), wherein the clamping means (3) comprise a plurality of clamping elements (3.2), which are moveable in a second direction (Y) relative to the brackets (3.1) and can be fixed to the brackets (3.1), wherein the plurality of light emitting diodes (5) is arranged along the first direction (X).

2. A clamping device according to claim 1, **characterised in that** the clamping means (3) comprise vacuum clamping suction members.

3. A clamping device according to claim 2, **characterised in that** the clamping elements (3.2) are displaceable in a second direction (Y) relative to the brackets (3.1) and can be secured to the brackets (3.1).

4. A clamping device according to one of claims 1 to 3, **characterised in that** the plurality of light emitting diodes (5) is arranged along a straight, preferably horizontally oriented, line.

5. A clamping device according to one of claims 1 to 4, **characterised in that** the light emitting diodes (5) - preferably each of the light emitting diodes (5) - of the plurality of individually activatable light emitting diodes (5) are so adapted as to respectively emit light (L) only of a given wavelength or that the light emitting diodes (5) - preferably each of the light emitting diodes (5) - of the plurality of individually activatable light emitting diodes (5) are so adapted as to emit light (L) of at least two different wavelengths.

6. A clamping device according to claim 5, **characterised in that** the light emitting diodes (5) - preferably each of the light emitting diodes (5) - of the plurality of individually activatable light emitting diodes (5) are in the form of RGB light emitting diodes.

7. A clamping device according to claim 2, **characterised in that** the positioning device (4) comprises a bracket positioning device (4.1), preferably having a plurality of light emitting diodes (5), for positioning of the brackets (3.1), and/or comprises a clamping element positioning device (4.2), comprising one, or preferably a plurality, of light-emitting diodes (5), for positioning the clamping elements (3.2) .

8. A clamping device according to claim 7, **characterised in that** the bracket positioning device (4.1) for positioning the brackets (3.1) is arranged on the machine frame (2), preferably arranged at a side surface of the machine frame (2), wherein in dependence on at least one target or actual parameter (P) displayed by way of the bracket positioning device (4.1) the individual brackets (3.1) are displaceable along the machine frame (2), preferably by hand, in the first direction (X) and are fixable to the machine frame (2).

9. A clamping device according to claims 7 or 8, **characterised in that** the clamping element positioning device (4.2) for positioning the clamping elements (3.2) is arranged at at least one, preferably each, bracket (3.1), wherein in dependence on at least one target or actual parameter (P) displayed by way of the clamping element positioning device (4.2) the individual clamping elements (3.2) are displaceable along the at least one bracket (3.1) by hand in the second direction (Y) and are fixable to the at least one bracket (3.1).

10. A clamping device according to one of claims 1 to 9, **characterised in that** the at least one target or actual parameter (P) represents
- a target position of the at least one clamping means (3) and/or
- a target size of the at least one clamping means (3) and/or
- a target orientation of the at least one clamping means (3) and/or
- a clamping status of the at least one clamping means (3) and/or
- a machine status and/or
- a target position or target orientation of the workpiece (W).

11. A clamping device according to one of claims 1 to 10, **characterised in that** the plurality of individual activatable light emitting diodes (5) is arranged and designed in the form of a millimetre scale or that a millimetre scale, preferably itself having light emitting diodes, is arranged adjacent to, preferably above, the plurality of individually activatable light emitting diodes (5).

12. A clamping device according to claim 11, **characterised in that** the millimetre scale has a plurality of millimetre lines respectively spaced at a millimetre from each other and oriented in mutually parallel relationship.

13. A clamping device according to one of claims 1 to 12, **characterised in that** the plurality of individually activatable light emitting diodes of the positioning device (4) is arranged on the at least one clamping means (3), preferably on each bracket (3.1), and/or on the machine frame (2).

14. A working machine (6) for woodworking, in particular a CNC working machine, comprising a working device (7) for working, in particular milling, an, in particular plate-shaped, workpiece (W) and a clamping device (1) according to one of claims 1 to 13.

15. A working machine according to claim 14, **characterised in that** the working device (7) has at least one working tool, for example a milling cutter, wherein the working device (7) is moveable together with the working tool relative to the machine frame (2) of the clamping device, preferably mounted moveably to the machine frame (2).

## Revendications

1. Dispositif de serrage (1) destiné au serrage d'une pièce à usiner (W), en particulier en forme de plaque, comprenant
• un bâti de machine (2),
• au moins un moyen de serrage (3) pouvant être déplacé par rapport au bâti de machine (2) et pouvant être relié audit bâti de machine (2), et
• au moins un dispositif de positionnement (4) destiné au positionnement dudit au moins un moyen de serrage (3) par rapport au bâti de machine (2), le dispositif de positionnement (4) présentant une pluralité de diodes électroluminescentes (5) activables individuellement, au moins un paramètre de consigne ou paramètre réel (P) pour ledit au moins un moyen de serrage (3) pouvant être affiché par au moins une diode électroluminescente activée (5), la pluralité de diodes électroluminescentes (5) étant conçue de sorte à pouvoir émettre une lumière (L) d'au moins deux longueurs d'onde différentes dans la plage des longueurs d'onde visibles,
• les moyens de serrage (3) comprenant plusieurs consoles (3.1), lesquelles peuvent être déplacées dans une première direction (X) par rapport au bâti de machine (2) et peuvent être fixées sur le bâti de machine (2), les moyens de serrage (3) comprenant plusieurs éléments de serrage (3.2) et les éléments de serrage (3.2) comprenant un moyen d'identification (10) destiné à signaler un type de moyen de serrage des éléments de serrage (3.2), une couleur du moyen d'identification (10) correspondant à une couleur émise par la pluralité de diodes électroluminescentes (5), laquelle couleur représente le type de moyen de serrage en tant que paramètre de consigne ou paramètre réel (P) dudit au moins un paramètre de consigne ou paramètre réel (P), et/ou
• les moyens de serrage (3) comprenant plusieurs consoles (3.1), lesquelles peuvent être déplacées dans une première direction (X) par rapport au bâti de machine (2) et peuvent être fixées sur le bâti de machine (2), les moyens de serrage (3) comprenant plusieurs éléments de serrage (3.2), lesquels peuvent être déplacés dans une deuxième direction (Y) par rapport aux consoles (3.1) et peuvent être fixés sur les consoles (3.1), la pluralité de diodes électroluminescentes (5) étant disposée le long de la première direction (X).

2. Dispositif de serrage selon la revendication 1, **caractérisé en ce que** les moyens de serrage (3) comprennent des ventouses de serrage à vide.

3. Dispositif de serrage selon la revendication 2, **caractérisé en ce que** les éléments de serrage (3.2) peuvent être déplacés dans une deuxième direction (Y) par rapport aux consoles (3.1) et peuvent être fixés sur les consoles (3.1).

4. Dispositif de serrage selon l'une des revendications 1 à 3, **caractérisé en ce que** la pluralité de diodes électroluminescentes (5) est disposée le long d'une ligne droite, de préférence orientée horizontalement.

5. Dispositif de serrage selon l'une des revendications 1 à 4, **caractérisé en ce que** les diodes électroluminescentes (5) - de préférence chacune des diodes électroluminescentes (5) - de la pluralité de diodes électroluminescentes (5) activables individuellement sont conçues de telle sorte qu'elles émettent chacune une lumière (L) d'une seule longueur d'onde déterminée, ou **en ce que** les diodes électroluminescentes (5) - de préférence chacune des diodes électroluminescentes (5) - de la pluralité de diodes électroluminescentes (5) activables individuellement sont conçues de telle sorte qu'elles émettent une lumière (L) d'au moins deux longueurs d'onde différentes.

6. Dispositif de serrage selon la revendication 5, **caractérisé en ce que** les diodes électroluminescentes (5) - de préférence chacune des diodes électroluminescentes (5) - de la pluralité de diodes électroluminescentes (5) activables individuellement sont réalisées sous forme de diodes électroluminescentes RGB.

7. Dispositif de serrage selon la revendication 2, **caractérisé en ce que** le dispositif de positionnement (4) présente un dispositif de positionnement des consoles (4.1), présentant de préférence une pluralité de diodes électroluminescentes (5), destiné au positionnement des consoles, et/ou un dispositif de positionnement des éléments de serrage (4.2), présentant de préférence une pluralité de diodes électroluminescentes (5), destiné au positionnement des éléments de serrage (3.2).

8. Dispositif de serrage selon la revendication 7, **caractérisé en ce que** le dispositif de positionnement des consoles (4.1) destiné au positionnement des consoles (3.1) est disposé sur le bâti de machine (2), de préférence sur une surface latérale du bâti de machine (2), chacune des consoles (3.1) pouvant être déplacée le long du bâti de machine (2), de préférence manuellement, dans la première direction (X) en fonction d'au moins un paramètre de consigne ou paramètre réel (P) affiché par le dispositif de positionnement des consoles (4.1), et pouvant être fixée sur le bâti de machine (2).

9. Dispositif de serrage selon la revendication 7 ou 8, **caractérisé en ce que** le dispositif de positionnement des éléments de serrage (4.2) destiné au positionnement des éléments de serrage (3.2) est disposé sur au moins une console (3.1), de préférence sur chaque console (3.1), chacun des éléments de serrage (3.2) pouvant être déplacé le long de ladite au moins une console (3.1), de préférence manuellement, dans la deuxième direction (Y) en fonction d'au moins un paramètre de consigne ou paramètre réel (P) affiché par le dispositif de positionnement des éléments de serrage (4.2), et pouvant être fixé sur ladite au moins une console (3.1).

10. Dispositif de serrage selon l'une des revendications 1 à 9, **caractérisé en ce que** ledit au moins un paramètre de consigne ou paramètre réel (P)
• est une position de consigne dudit au moins un moyen de serrage (3) et/ou
• est une grandeur de consigne dudit au moins un moyen de serrage (3) et/ou
• est une orientation de consigne dudit au moins un moyen de serrage (3) et/ou
• est un état de serrage dudit au moins un moyen de serrage (3), et/ou
• représente un état de machine et/ou
• représente une position de consigne ou une orientation de consigne de la pièce à usiner (W).

11. Dispositif de serrage selon l'une des revendications 1 à 10, **caractérisé en ce que** la pluralité de diodes électroluminescentes activables individuellement (5) est disposée et réalisée sous la forme d'une échelle millimétrique, ou **en ce qu'**une échelle millimétrique, présentant de préférence elle-même des diodes électroluminescentes, est disposée adjacente à la pluralité de diodes électroluminescentes (5) activables individuellement, de préférence au-dessus de celle-ci.

12. Dispositif de serrage selon la revendication 11, **caractérisé en ce que** l'échelle millimétrique présente une pluralité de traits millimétriques alignés parallèlement les uns aux autres et espacés chacun d'un millimètre.

13. Dispositif de serrage selon l'une des revendications 1 à 12, **caractérisé en ce que** la pluralité de diodes électroluminescentes activables individuellement du dispositif de positionnement (4) est disposée sur ledit au moins un moyen de serrage (3), de préférence sur chaque console (3.1), et/ou sur le bâti de machine (2).

14. Machine d'usinage (6) pour l'usinage du bois, en particulier machine d'usinage CNC, comprenant un dispositif d'usinage (7) destiné à usiner, en particulier à fraiser, une pièce à usiner (W), en particulier en forme de plaque, et un dispositif de serrage (1) selon l'une des revendications 1 à 13.

15. Machine d'usinage selon la revendication 14, **caractérisée en ce que** le dispositif d'usinage (7) présente au moins un outil d'usinage, par exemple une fraise, le dispositif d'usinage (7), avec l'outil d'usinage, pouvant être déplacé par rapport au bâti de machine (2) du dispositif de serrage (1), de préférence en étant monté mobile sur le bâti de machine (2).
